(19) Europäisches Patentamt
European Patent Office
Office européen des brevets

(11) **EP 2 309 641 B1**

(12) **EUROPÄISCHE PATENTSCHRIFT**

(45) Veröffentlichungstag und Bekanntmachung des Hinweises auf die Patenterteilung:
**12.12.2012   Patentblatt 2012/50**

(51) Int Cl.:
***H02P 23/12*** *(2006.01)*          ***H02P 29/02*** *(2006.01)*

(21) Anmeldenummer: **10187125.9**

(22) Anmeldetag: **11.10.2010**

(54) **Verfahren und Vorrichtung zum fehlersicheren Überwachen eines elektromotorischen Antriebs**

Method and device for error-free monitoring of an electric motor drive

Procédé et dispositif de surveillance sécurisé contre les erreurs d'un entraînement à moteur électrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.10.2009   DE 102009048944**

(43) Veröffentlichungstag der Anmeldung:
**13.04.2011   Patentblatt 2011/15**

(73) Patentinhaber: **SICK AG**
**79183 Waldkirch (DE)**

(72) Erfinder: **Ams, Mathias**
**79183, Waldkirch (DE)**

(74) Vertreter: **Ludewigt, Christoph**
**Sick AG**
**Intellectual Property**
**Erwin-Sick-Strasse 1**
**79183 Waldkirch (DE)**

(56) Entgegenhaltungen:
**EP-A1- 2 098 930          EP-A2- 1 746 717**
**WO-A1-2007/085331          WO-A2-2009/007681**
**DE-A1-102005 010 854**

EP 2 309 641 B1

## Beschreibung

Die Erfindung betrifft ein Verfahren zum Steuern bzw. Überwachen eines Antriebs und eine entsprechende Vorrichtung.

Die in Rede stehenden Antriebe werden in der industriellen Anwendung in Werkzeugmaschinen, Robotern, Förderanlagen, Pumpen und dergleichen eingesetzt. Da von diesen Antrieben bzw. den Maschinen in vielen Anwendungen potentiell eine Gefahr für das Leben und die Gesundheit des Bedienungspersonals ausgeht, müssen die Antriebe abgesichert sein. Die Maßnahmen zur Absicherung unterliegen strengen internationalen und europäischen Normenvorschriften bezüglich Ausfallsicherheit, Zuverlässigkeit und dergleichen. Speziell für elektrische Leistungsantriebe beschreibt die Norm EN 61800-5-2 "Elektrische Leistungsantriebssysteme mit einstellbarer Drehzahl; Teil 5-2; Anforderungen an die Sicherheit - Funktionale Sicherheit" eine Reihe von Antriebsüberwachungsfunktionen, mit deren Hilfe Gefahr bringende Bewegungen fehlersicher kontrolliert und stillgesetzt werden sollen. Eine Vielzahl weiterer Normen sind ebenfalls einschlägig, wie z.B. die Norm EN 954 "Sicherheitsbezogene Teile von Steuerungen" und deren Nachfolgenorm EN 13849. Im Folgenden werden die Begriffe "fehlersicher" und "sicher" synonym gebraucht in der Bedeutung, dass die damit gekennzeichneten Systeme und Tätigkeiten entsprechend den Normenvorschriften "sicher" sind bzw. durchgeführt werden und Fehler oder Fehlfunktionen, die zu einer Gefährdung führen könnten, erkannt werden oder zu einer Reaktion zur Gefahrenreduzierung führen, wie es die Normen fordern.

Zur Erfüllung der Sicherheitsanforderungen an Antrieben wurden bisher externe Sensoren, wie Encoder und weitere Sensoren zur Bestimmung von Position, Drehzahl und Drehmoment eingesetzt, die wiederum verschiedene Sicherheitsnormen, wie beispielsweise EN/IEC 61496 "Sicherheit von Maschinen - Berührungslose Schutzeinrichtungen (BWS)" oder EN 61508 "Funktionale Sicherheit sicherheitsbezogener elektrischer/elektronischer/programmierbarer elektronischer Systeme" erfüllen müssen.

Der Einsatz externer Sensoren ist nachteilig, da zusätzlich zur Maschine die Sensoren überhaupt vorgesehen sein müssen und eine den Sicherheitsanforderungen entsprechende Verdrahtung zwischen Schaltschrank, in der sich die Ansteuerung für die Maschine befindet, und der Feldebene gezogen werden muss. Abhängig vom Aufbau des Sensors kann es des Weiteren auch erforderlich sein, dass ein zusätzlicher redundanter Sensor installiert werden muss, um die erforderliche Fehlersicherheit der Maschine zu erlangen. Durch die Montage der Sensoren und der Verdrahtung sind der Aufwand und damit die Kosten erhöht. Die Sensoren, die sich in der rauen Feldebene befinden, sind durch die Umgebungsbedingungen stärker ausfallgefährdet, wodurch die Verfügbarkeit der Maschine beeinträchtigt ist.

Deshalb wurde in der DE 10 2005 010 854 A1 eine Einrichtung vorgeschlagen, um auf die zusätzlichen Sensoren verzichten zu können. Nach der Lehre dieses Dokuments ist ein Antriebswächter vorgesehen, mit dem die Drehzahl, das Drehmoment und die Drehrichtung ermittelt werden können und zwar aus den Strom- und Spannungsverläufen, wie sie von einer dreiphasigen Ansteuerelektronik an den Elektromotor gegeben werden. Dazu führt der Antriebswächter eine Vektorberechnung von Spannung U und Strom I durch und bestimmt aus den vektoriellen Daten, insbesondere aus dem Winkel des elektrischen Drehfeldes, Drehzahl, Drehrichtung und Drehmoment des Motors.

Die erforderliche Vektorberechnung ist sehr aufwändig und erfordert viel Rechenleistung. Die größte Einschränkung besteht darin, dass dieser Antriebswächter nur für synchrone Motoren geeignet ist und nicht für asynchrone, da die Bestimmung von Drehzahl und Drehrichtung nur über den Winkel des elektrischen Drehfeldes erfolgt, jedoch die elektrischen und dynamischen Eigenschaften der Asynchronmaschine vernachlässigt werden.

Diese Nachteile treffen auch auf das aus der WO 2007/085331 A1 bekannte Verfahren zum geberlosen Betrieb einer Synchronmaschine mit einem Pseudorausch-Testsignal zu.

Ausgehend von diesem Stand der Technik ist es Aufgabe der Erfindung, ein verbessertes Verfahren und eine verbesserte Vorrichtung zum fehlersicheren Überwachen eines elektromotorischen Antriebs bereitzustellen, mit dem insbesondere asynchrone Motoren ohne zusätzliche Sensoren sicherheitsgerichtet überwachbar sind.

Diese Aufgabe wird gelöst durch ein Verfahren mit den Merkmalen des Anspruchs 1 und eine Vorrichtung mit den Merkmalen des Anspruchs 11.

Das erfindungsgemäße Verfahren umfasst die Schritte:

- Erfassen der Strom- und Spannungsverläufe, wie sie von einer Antriebselektronik an den Motor gegeben werden,
- Ermitteln der Lastdrehzahl unter Verwendung dieser Werte,
- fehlersicheres Abschalten des Antriebs, wenn die berechnete Lastdrehzahl nicht einer vorgegebenen Solldrehzahl im Rahmen vorgegebener Toleranzen übereinstimmt,
- wobei erfindungsgemäß der Schritt der Ermittlung der Lastdrehzahl durch Berechnen eines Beobachtermodells anhand des erfassten Stroms, der erfassten Spannung, der von der Ansteuerung vorgegeben Frequenz und der Kennfelddaten des Motors erfolgt.

Die erfindungsgemäße Vorrichtung zur Durchführung des erfindungsgemäßen Verfahrens umfasst entsprechende Mittel, nämlich Mittel zum Erfassen der Strom - und Spannungsverläufe jeder der drei Phasen, wie sie von einer Antriebselektronik an den Motor gegeben werden, Mittel zum Ermitteln der Lastdrehzahl unter Verwendung der erfassten Strom- und Spannungswerte, wobei die Ermittlung der Lastdrehzahl durch Berechnen eines Beobachtermodells anhand des erfassten Stroms, der erfassten Spannung, der von der Ansteuerung vorgegebenen Frequenz und der Kennfelddaten des Motors erfolgt und Mittel zum Erzeugen eines fehlersicheren Schaltsignals zum fehlersicheren Abschalten des Motors, wenn die berechnete Lastdrehzahl nicht mit einer vorgegebenen Solldrehzahl im Rahmen vorgegebener Toleranzen übereinstimmt.

Eine Ermittlung der Lastdrehzahl durch Berechnen eines Beobachtermodells erfordert erheblich weniger Rechenleistung und ist deshalb weniger aufwändig und kostengünstiger zu realisieren, da keine Vektorberechnung erfolgt. Statt der Vektorberechnung werden die gemessenen Augenblickswerte herangezogen und können z.B. auf einen Effektivwert zurückgerechnet werden, welcher dann als Referenzwert zum Vergleich für den statischen Lastpunkt auf der Motorkennlinie herangezogen wird. Der Einfluss dynamischer Laständerungen wird durch die Ermittlung der Änderung der Effektivwerte von Strom und Spannung erkannt, was zur Bestimmung von Drehzahl und Drehmoment verwendet wird. Die dynamische Änderung der Frequenz durch die Ansteuerelektronik (Servoantrieb, Frequenzumrichter) wird anhand der Steigungsgeschwindigkeit von Strom und Spannung erkannt, was zur Ermittlung der Frequenz angewendet werden kann. Aufgrund der Orientierung an den Kennlinien sind insbesondere Asynchronmotoren genauer erfassbar. Die entscheidenden Kennliniendaten werden aus den Typenschilddaten rekonstruiert. Diese liegen gegebenenfalls elektronisch vor und können eingelesen werden. Eine solche Ermittlung der Lastdrehzahl ist auch stabiler, denn es können Effektivwerte genommen werden.

Es lassen sich folgende, von der Norm geforderte und dort definierte Antriebsüberwachungsfunktionen damit realisieren:

- Safe Stop 1 (SS1)
- Safely-limited acceleration (SLA)
- Safe acceleration range (SAR)
- Safely-limited speed (SLS)
- Safe speed range (SSR)
- Safely-limited torque (SLT)
- Safe torque range (STR)
- Safely-limited increment (SLI)
- Safe direction (SDI)
- Safe brake control (SBC)
- Safe speed monitor (SSM)

Dabei bleiben die Vorteile einer Überwachung ohne externe Sensoren erhalten, wie geringe Kosten, keine mechanische Anbauten, wenig Verdrahtungsaufwand, Vermeidung von Fehlerquellen, die sich durch zusätzliche Sensoren ergeben könnten, Reduzierung des Projektierungsaufwandes. Es müssen keine Sensoren in der Feld-ebene installiert werden, wodurch die Ausfallsicherheit erhöht ist. Die erfindungsgemäße Überwachung ist in eine Sicherheitsarchitektur einfach integrierbar. Insgesamt ist mit dem erfindungsgemäßen Verfahren und Vorrichtung eine höhere Verfügbarkeit der Maschine erreichbar.

Im Falle des Asynchronmotors kann in einer ersten Ausführungsform die Lastdrehzahl anhand der Formel

$$n_L = \frac{1}{p} * f_{FU} * 60\,s/\min - \frac{I_{mess}}{I_n} * \frac{f_{FU}}{U_{mess}} * \frac{U_N}{f_N} * (n_{syn} - n_n)$$

bestimmt werden, wobei

| | |
|---|---|
| $I_n$ | Nennstrom |
| $f_N$ | Nennfrequenz |
| $U_N$ | Nennspannung |
| $n_{syn}$ | Synchrondrehzahl |
| $n_n$ | Nenndrehzahl |
| $n_L$ | Lastdrehzahl |
| $p$ | Polpaarzahl |

als Kennfelddaten hinterlegt sind, wie weiter unten ausführlich beschrieben ist. Eine solche Bestimmung stellt ein relativ einfaches Modell für einen Asynchronmotor dar und ist schnell mit wenig Aufwand berechenbar. Dieses relativ einfache Modell beinhaltet vereinfachende Annahmen, die aber aufgrund der physikalischen

Gegebenheiten immer im "sicheren" Bereich im Sinne der funktionalen Sicherheit liegen, wie weiter unten unter Bezugnahme auf dieses Ausführungsbeispiel detailliert erläutert wird.

Weiter kann in diesem vereinfachten Modell das Lastdrehmoment in einfacher Weise aus dem erfassten Strom und den Kennfelddaten für das Nenndrehmoment und dem Nennstrom bestimmt werden, so dass das Lastdrehmoment überwacht wird und z. B. bei Blockade des Motors und damit Überschreiten eines Grenzwertes, eine fehlersichere Abschaltung erfolgen kann.

In einer zweiten Ausführungsform wird ebenfalls für den Fall eines Asynchronmotors die Lastdrehzahl anhand der Formel

$$n = n_{syn}(1-s)$$

bestimmt, wobei $n_{syn}$ die Synchrondrehzahl und s der Schlupf ist. Diesem Beobachtermodell liegen detailliertere Annahmen zugrunde, die in die Berechnung des Schlupfes s eingehen, so dass es genauer ist und gegenüber dem ersten Ausführungsbeispiel genauere Werte ergibt.

Vorteilhafterweise errechnet sich der Schlupf aus den Effektivwerten von Strom und Spannung, dem Rotorwiderstand und der Streuinduktivität, wobei der Berechnung das bekannte T-Ersatzschaltbild für eine Asynchronmaschine zugrunde liegt.

Dann lässt sich aus den Kennfelddaten das Kippmoment $M_k$ und der Kippschlupf $s_k$ in einfacher Weise berechnen und daraus zusammen mit dem Schlupf s das Lastdrehmoment $M_L$ mit Hilfe der Kloßschen Formel bestimmen. Bei Überschreiten des Lastdrehmomentes $M_L$ über einen Grenzwert erfolgt eine fehlersichere Abschaltung.

Mit dem erfindungsgemäßen Verfahren und Vorrichtung sind auch Synchronmotoren hinsichtlich der Lastdrehzahl und Lastdrehmoment überwachbar. Die Synchronmaschine arbeitet ohne Schlupf, daher ist hier die Messung der Ausgangsfrequenz $f_{FU}$ des Frequenzumrichters der Antriebselektronik als Kriterium für die sichere Drehzahlerfassung ausreichend. Für den Fall, dass der Rotor vom Ständerdrehfeld nicht mitgeführt wird, d. h. sich der Rotor nicht mit der Ständerfrequenz dreht, ist die Maschine nicht sauber geführt. Dieser Fall stellt aber unter dem Gesichtspunkt der funktionalen Sicherheit keinen kritischen Fall dar, da hier die Lastdrehzahl geringer ist, als die durch die Vorrichtung ermittelte. Also gilt:

$$n_L = \frac{1}{p} * f_{FU} * 60 s / \min$$

Die Synchronmaschine kann ab Drehzahl n = 0 bis zur Synchrondrehzahl ein konstantes Lastdrehmoment abgeben. Das Lastdrehmoment ist außerhalb der Sättigung der Maschine proportional zum Eingangsstrom. Die Synchronmaschine sollte nicht im Bereich der Sättigung betrieben werden, stellt aber aus dem Gesichtspunkt der Funktionalen Sicherheit keinen kritischen Fall dar, da in der Sättigung das Lastdrehmoment weniger steigt als der Eingangsstrom. Somit gilt für die sichere Ermittlung des Lastdrehmoments:

$$M_L = M_n * \frac{I_{mess}}{I_n}$$

Vorteilhafterweise erfolgt die Berechnung des Beobachtermodells in einem Mikroprozessor. Dazu ist vorgesehen, dass die erfassten Strom- und Spannungssignale für die Mikroprozessor-Auswertung angepasst werden, wobei die Signale in für Mikroprozessoren verträgliche Bereiche, z. B. 3,3 V oder 5 V, gewandelt werden.

Wenn im Falle der Überwachung eines Synchron- oder Asynchronmotors die Spannungen und Ströme aller drei Phasen mit entsprechenden Mitteln erfasst werden, kann aus jeweils zwei Spannungen bzw. zwei Strömen die dritte Spannung bzw. der dritte Strom berechnet werden, denn für den Synchron- und den Asynchronmotor gilt: ΣU=0 und ΣI=0. Die berechneten Größen lassen sich mit den gemessenen Werten vergleichen und damit bei Abweichungen über eine Toleranzgrenze Leitungsbrüche, Kurzschlüsse, Querschlüsse, Phasenausfall und dergleichen mehr erfassen. Ist ein solcher Fehler erkannt, erfolgt eine fehlersichere Abschaltung über die Mittel zum Abschalten.

Eine Überwachung eines Synchron- oder Asynchronmotors kann nicht nur dann erfolgen, wenn er im motorischen Betrieb läuft, sondern auch im generatorischen Betrieb, wozu in Weiterbildung der Erfindung Mittel zur Erkennung der motorischen oder generatorischen Betriebsart vorgesehen sind. Diese Mittel erkennen die Betriebsart über den Phasenwinkel zwischen Strom und Spannung, denn dann ist der Strom in Gegenphase zur Spannung.

In Weiterbildung der Erfindung sind Mittel zur Bestimmung der Drehrichtung vorgesehen, die aus der Phasenfolge der drei Phasen die Drehrichtung bestimmen und bei Abweichung von einer Soll-Drehrichtung ein fehlersicheres Abschalten erfolgt, so dass auch eine Überwachung der Drehrichtung möglich ist.

Um eine geforderte Sicherheitskategorie entsprechend den Normen zu erreichen, ist vorteilhafterweise ein zweikanaliger Aufbau vorgesehen, wobei insbesondere zwei redundante Mikroprozessoren eingesetzt sind, die vorzugsweise diversitär sind und/oder auf denen diversitäre Algorithmen laufen. Bei Fehler in einem Kanal oder Ausfall des Kanals kann der andere Kanal eine Abschaltung bewirken, wobei sich die beiden Mikroprozessoren gegenseitig überwachen können, indem beispielsweise ihre Ergebnisse permanent miteinander verglichen werden.

Im Folgenden wir die Erfindung anhand eines Ausführungsbeispiels unter Bezugnahme auf die Zeichnung im Einzelnen erläutert. In der Zeichnung zeigen:

Fig. 1     einen Elektromotor mit Ansteuerung und erfindungsgemäßer Vorrichtung zum Überwachen;

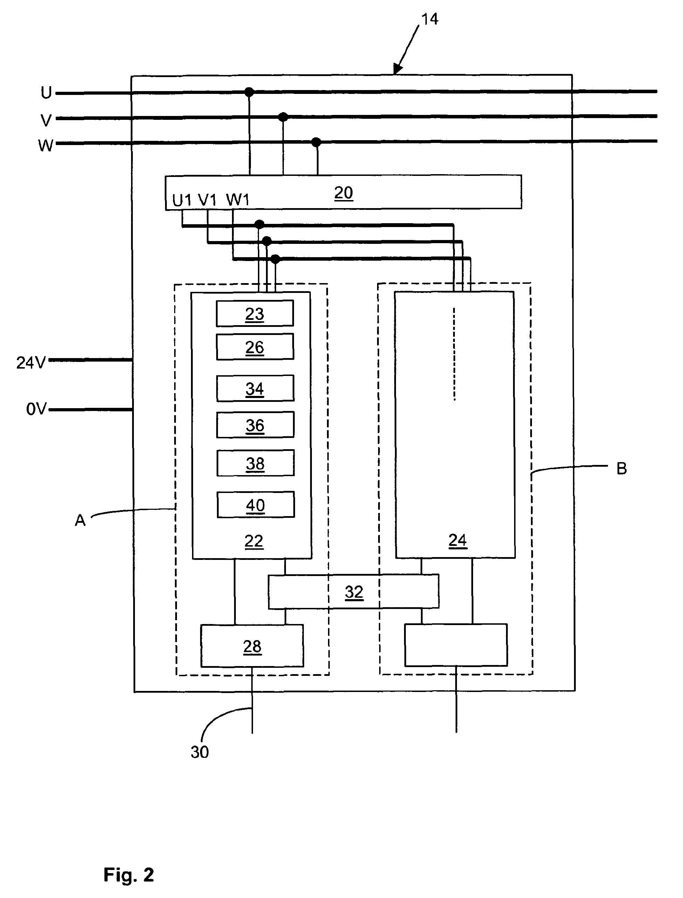

Fig. 2     ein schematisches Blockschaltbild der erfindungsgemäßen Vorrichtung;

Fig. 3     ein schematisches Ablaufdiagramm des erfindungsgemäßen Verfahrens;

Fig. 4     verschiedene Kennlinien von Asynchronmaschinen;

Fig. 5     Verlauf des Drehmoments einer Asynchronmaschine nach der Kloßschen Formel;

Fig. 6     vereinfachtes T-Ersatzschaltbild der Asynchronmaschine.

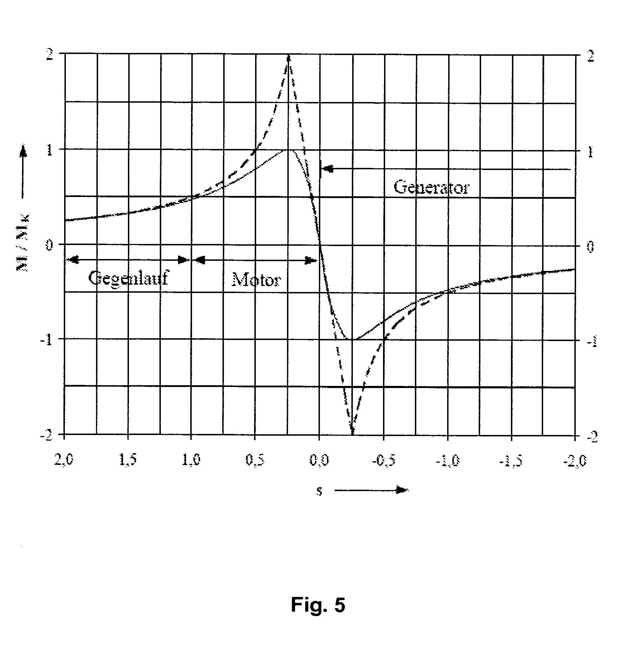

In der Fig.5 ist eine typische Kennlinie mit durchgezogener Linie dargestellt. Zusätzlich ist ein Modellverlauf gestrichelt dargestellt, aus dem zu erkennen ist, dass das Modell das Verhalten der Asynchronmaschine gut beschreibt, jedoch in dem Bereich, in dem das Drehmoment das Kippmoment erreicht, Schwächen aufweist.

Im Folgenden werden zwei Ausführungsbeispiele der Erfindung beschrieben, die beide eine Asynchronmaschine beschreiben. Das erste Ausführungsbeispiel geht von einem linearisierten Beobachtermodell aus und gibt deshalb den Kennlinienverlauf nur im Bereich weit unterhalb des Kippschlupfes, d. h. bis maximal zum doppelten Nennstrom des Motors ausreichend gut wieder. Das zweite Ausführungsbeispiel ist in der Berechnung aufwendiger, aber gibt den Kennlinienverlauf in einem größeren Bereich korrekt wieder. Es basiert auf dem T-Ersatzschaltbild und beschreibt den Motor auf beiden Seiten des Kipppunktes. Es hat somit einen größeren Geltungsbereich und ist entsprechend genauer.

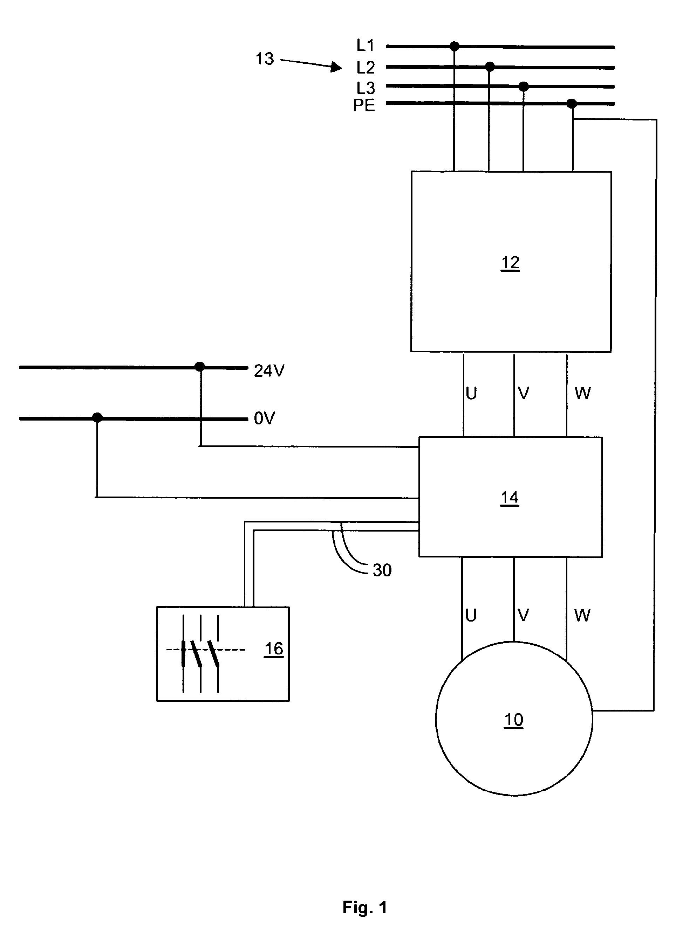

In Fig. 1 ist ein elektromotorischer Antrieb, nämlich Elektromotor 10, dargestellt. Der Elektromotor 10 wird dreiphasig von einer Antriebselektronik 12 angesteuert mit den Motorphasen U, V, W. Die Antriebselektronik 12 wird versorgt von einer dreiphasigen Versorgungsleitung 14 mit den Phasen L1, L2, L3 und Erdleitung PE. Zur Ansteuerung des Elektromotors 10, der vorzugsweise ein Asynchronmotor ist, umfasst die Antriebselektronik 12 einen Frequenzumrichter, der eine Frequenz $f_{FU}$ liefert, wobei die Strom- und Spannungssignale an den drei Motorphasen U, V, W als pulsweitenmodulierte Signale vorliegen.

Zwischen dem Elektromotor 10 und der Antriebselektronik 12 ist die erfindungsgemäße Vorrichtung 14 zum fehlersicheren Überwachen des Antriebs des Elektromotors 10 angeordnet. Mit der Vorrichtung 14 werden die Strom- und Spannungsverläufe auf den drei Motorphasen U, V, W erfasst und aus diesen wenigstens die Lastdrehzahl bzw. das Lastdrehmoment des Elektromotors 10 ermittelt, wie weiter unten anhand der bereits angesprochenen zwei Ausführungsbeispiele beschrieben wird. Wenn die so ermittelte Lastdrehzahl nicht mit einer vorgegebenen Solldrehzahl im Rahmen vorgegebener Toleranzen übereinstimmt, wird der Antrieb und damit der Elektromotor über entsprechende Schaltmittel 16, beispielsweise Motorschütze, abgeschaltet. Für die sicherheitstechnische Auswertung in der Vorrichtung 14 und für die Aktivierung von Sicherheits-Schaltsignalen benötigt die Vorrichtung 14 eine entsprechende Spannungsversorgung über beispielsweise 24 V.

Im Folgenden wird die Vorrichtung 14 und das erfindungsgemäße Verfahren zum fehlersicheren Überwachen des Elektromotors 10 im Einzelnen beschrieben.

Die Vorrichtung 14 weist Mittel 20 zum Erfassen der Strom- und Spannungsverläufe jeder der drei Phasen U, V, W auf, wie sie von der Antriebselektronik 12 an den Motor 10 gegeben werden. Mit diesen Mitteln 20 werden die als pulsweitenmodulierte Signale vorliegenden Phasen U, V, W galvanisch entkoppelt und auf den Pegel der nachfolgenden Auswertung, z. B. 3,3 V oder 5 V gewandelt. Die so angepassten Signale U1, V1, W1 werden im Weiteren in zwei parallelen Kanälen A und B ausgewertet.

Die beiden Kanäle A und B umfassen jeweils insbesondere je einen Mikroprozessor 22 bzw. 24, so dass in beiden Kanälen eine identische Auswertung mittels gleicher oder diversitärer Algorithmen erfolgt, weshalb im Folgenden nur einer der Kanäle, nämlich A, detaillierter beschrieben wird.

Zunächst müssen die gewandelten Signale U1, V1, W1 bzw. die darin enthaltenen Strom- und Spannungswerte für die folgende Auswertung erfasst und aufbereitet werden. Die Spannungsmessung erfolgt zwischen den Anschlüssen U1, V1 und W1 des Motors. Zur Spannungsmessung erkennt die erfindungsgemäße Vorrichtung 14 anhand des Signalverlaufs, ob der angeschlossene Motor 10 von einem kontinuierlichen Signal oder einem getakteten Signal versorgt wird. Bei kontinuierlichen Spannungen misst ein im Mikroprozessor 22 integrierter Analog-Digital-Wandler den Wert in konstanten Zeitabständen.

Liegen die Spannungen als pulsweitenmodulierte Signale an den drei Motorphasen U1, V1, W1 vor, so werden die Flanken der getakteten Signale als Ein- und Ausschalt-Trigger für einen Vorwärts und Rückwärtszähler verwendet. Hierzu gilt der Sachverhalt, dass bei einer Spannung größer 0 inkrementiert wird und bei einer Spannung kleiner 0 dekrementiert wird. Der Zählerstand des Vorwärts-RückwärtsZählers wird in einem konstanten Zeitintervall ausgelesen und zu dem Timerwert ins Verhältnis gesetzt, wodurch sich der kontinuierliche Verlauf der Spannung nachbilden lässt.

$$U_{kont} = \frac{Z}{T} k_{tz} * U_N$$

wobei

| | |
|---|---|
| $U_N$ | Nennspannung |
| $U_{kont}$ | kontinuierliche Spannung |
| T | Timerwert |
| Z | Zählerwert |
| $K_{tz}$ | Faktor um Zähler und Timer anzupassen. |

Zur Strommessung misst bei kontinuierlichen Spannungen ein im Mikrocontroller integrierter Analog-Digital-Wandler über einen Messwandler den Wert der Phasenströme in konstanten Zeitabständen.

Bei getakteten Phasenspannungen sind die Phasenströme ebenfalls getaktet, jedoch stark geglättet durch die Induktivitäten des Motors. Diese Phasenströme werden über Messwandler und einen im Mikrocontroller integrierten Analog-Digital-Wandler ermittelt. Die durch die Spannungsmessung erfassten Flanken können ggf. als Triggersignal für den Analog-Digital-Wandler genutzt werden, um die Qualität der Strommessung zu erhöhen.

Für die weitere Bearbeitung im Mikroprozessor 22 müssen die gemessenen Spannungen und Ströme in einer Aufbereitungseinheit 23 aufbereitet werden. Dazu werden die Effektivwerte von Strom und Spannung bestimmt, um die weiter unten beschriebenen Beobachtermodelle im stationären Zustand betrachten zu können. Weiterhin ist die Aufbereitung der Messwerte von Strom und Spannung erforderlich, da die Ermittlung von Frequenz und Effektivwert ohne diese nicht möglich ist. Die nachfolgende Betrachtung zur Aufbereitung der Messwerte gilt für Ströme und Spannung gleichermaßen.

Bei Sinusgrößen hängt die Steigung in einem Punkt von Frequenz und Amplitude ab. Da anders als bei einem Frequenzumrichter kein Einfluss auf eine Stellgröße besteht, kann nicht sicher gestellt werden, ob sich die Amplitude oder die Frequenz der Messgröße geändert hat. Somit ist es erforderlich, eine auf "1" normierte Sinusgröße zu berechnen.

Der Effektivwert wird erhalten, indem man die Werte der drei Phasen an einem Messpunkt aufaddiert und daraus den gleitenden Mittelwert bestimmt. In Abhängigkeit der Anzahl Messpunkte lässt sich daraus der Effektivwert in einfacher Weise ermitteln.

Aus einem Einzelwert einer Phase und dem Effektivwert lässt sich der Phasenwinkel $\alpha$ bestimmen und mit diesem und dem Zeitintervall zwischen zwei Messungen die Ständerfrequenz $f_{sync}$.

Der Effektivwert von Strom $I_{eff}$ oder Spannung $U_{eff}$ und $n_{syn}$ stellen einen zeitlichen Versatz zur tatsächlichen Systemgröße dar, wobei der Versatz von der Anzahl der für die Mittelwertbildung verwendeten Messpunkte abhängt. Daher ist die Anzahl der Messpunkte so zu wählen, dass der zeitliche Versatz nicht zu groß wird, aber die Erfassung der Messgrößen dennoch stabil ist.

Sind die Messwerte in dieser Weise in der Aufbereitungseinheit 23 des Mikroprozessors 22 aufbereitet worden, wird mit Mitteln 26 zum Ermitteln der Lastdrehzahl $n_L$ des Motors 10 unter Verwendung der erfassten und aufbereiteten Messwerte sowie der von der Ansteuerung vorgegebenen Umrichterfrequenz $f_{FU}$, die der Ständerfrequenz $f_{sync}$ entspricht und den Kennfelddaten des Motors 10 die Lastdrehzahl $n_L$ durch Berechnen eines Beobachtermodells bestimmt.

Einem ersten Ausführungsbeispiel liegt ein erstes Beobachtermodell zugrunde, bei dem unter Verwendung der erfassten Strom- und Spannungswerte die Lastdrehzahl nach der Formel (1) berechnet wird.

$$(1) \qquad n_L = \frac{1}{p} * f_{FU} * 60s/\min - \frac{I_{mess}}{I_n} * \frac{f_{FU}}{U_{mess}} * \frac{U_N}{f_N} * (n_{syn} - n_n)$$

wobei:

| | |
|---|---|
| $n_L$ | Lastdrehzahl |
| $f_{FU}$ | Ausgangsfrequenz des Frequenzumrichters |
| $I_{mess}$ | Effektivwert des Stroms |
| $I_n$ | Nennstrom |
| $U_{mess}$ | Effektivwert der Spannung |
| $f_N$ | Nennfrequenz |
| $U_N$ | Nennspannung |
| $n_{syn}$ | Synchrondrehzahl |
| $n_n$ | Nenndrehzahl |
| $p$ | Polpaarzahl |

Wie und mit welchen Annahmen sich diese Formel (1) ableitet, wird im Folgenden erläutert:

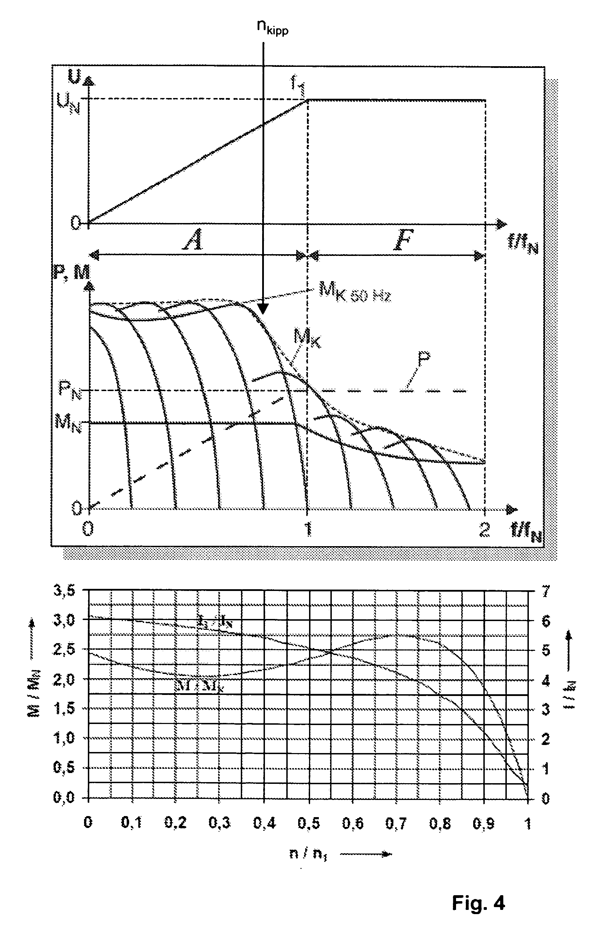

Die Ausgangsfrequenz des Frequenzumrichters $f_{FU}$ bestimmt die Lastdrehzahl des Motors. In der Ansteuerkennlinie des Motors verhalten sich Spannung und Frequenz proportional zueinander. Eine solche Ansteuerkennlinie ist zusammen mit typischen Kennlinien von Asynchronmaschinen in Fig. 4 dargestellt. Die "natürliche" Drehzahl-Drehmoment-Kennlinie oberhalb der Kippdrehzahl $n_{kipp}$ ist die Arbeitskennlinie des Antriebs beim Netzbetrieb. Diese Kennlinie wird beim Betrieb am Frequenzumrichter mit sinkender Frequenz verschoben. Wird der Motor an einem 50Hz Netz betrieben, so ist die Frequenz f starr, und der Motor kann maximal das Drehmoment $M_{kipp}$ abgeben. Hierbei sinkt die Läuferdrehzahl bis zu $n_{kipp}$ ab.

Bedingt durch das oben beschriebene Verhalten gilt für die Drehzahl der ASM der folgende Zusammenhang:

$$n_L = n_{el} - \frac{M_L}{M_n}(n_{syn} - n_n)$$

$$n_{el} = \frac{1}{p} * f_{FU} * 60s/\min$$

mit

| | |
|---|---|
| $n_{el}$: | Drehzahl des elektrischen Drehfeldes |
| $M_L$: | Lastdrehmoment |
| $M_n$: | Nenndrehmoment |

Der Ständerstrom, also derjenige, den der Frequenzumrichter treiben muss steigt im Bereich von $M_L / M_n = 0{,}4$ bis $1{,}6$ nahezu linear an, darüber steigt der Strom überproportional zum Lastmoment an. Somit ist sichergestellt, dass bei der Abbildung des $M_L$ über den gemessenen Strom, das resultierende abgeleitete $M_L$ immer geringer sein wird als das welches sich maximal an der Motorwelle einstellen wird. Somit sind resultierendes berechnetes Drehmoment $M_L$ und Drehzahl $n_L$ immer als sicher im sinne der funktionalen Sicherheit zu sehen.

Diese in Fig.4, untere Bild dargestellte Verhalten und der Umstand, dass in der industriellen Antriebstechnik Frequenzumrichter typischerweise nur für 60s den doppelten Nennstrom $I_n$ abgeben können, erlauben die Anwendung der folgenden Beziehung:

| | |
|---|---|
| $I_{mess}$: | gemessener Strom |
| $I_n$: | Nennstrom |

$$M_L = M_n * \frac{I_{mess}}{I_n}$$

Somit kann die Drehzahl wie folgt berechnet werden:

$$n_L = \frac{1}{p} * f_{FU} * 60s/\min - \frac{M_n * \dfrac{I_{mess}}{I_n}}{M_n} * (n_{syn} - n_n)$$

$$n_L = \frac{1}{p} * f_{FU} * 60s/\min - \frac{I_{mess}}{I_n} * (n_{syn} - n_n)$$

Die folgenden Größen sind durch die Konstruktion der ASM festgelegt:

$n_{syn}$
$n_n$
$I_n$

Die folgenden Größen werden in der Vorrichtung 14 gemessen:

$I_{mess}$
$f_{FU}$

Der bereits oben beschriebene Zusammenhang zwischen Drehmoment und Strom

$$M_L = M_n * \frac{I_{mess}}{I_n}$$

kann herangezogen werden, um sicher zu stellen, dass eine vorgegebene Obergrenze für das Drehmoment nicht überschritten wird. Zur Bestimmung des Drehmoments wird die der Messstrom herangezogen.
Die folgenden Größen sind durch die Konstruktion der ASM festgelegt:

$M_n$
$I_n$

$I_{mess}$ wird in der Vorrichtung 14 gemessen.

Des Weiteren sollte der Einfluss der Flussabsenkung berücksichtigt werden. Moderne Frequenzumrichter senken zur Reduzierung der elektrischen Energie den magnetischen Fluss im Teillastbereich der Maschine ab. Diese Absenkung wird durch Absenken der Ausgangsspannung erreicht. Das bedeutet eine Senkung des Kippmoments $M_{kipp}$ bei gleichbleibender Kippdrehzahl $n_{kipp}$ und somit gleichbleibender Kippfrequenz $f_{kipp}$. Die Vorrichtung 14 erkennt dies dadurch, dass das Verhältnis U/$f_{FU}$ nicht mehr proportional ist. Dies hat zur Folge, dass die Arbeitskennlinie des Asynchronmotors eine geringere Steigung hat. Der Faktor

$$\frac{f_{FU}}{U_{mess}} * \frac{U_N}{f_N}$$

berücksichtigt also den Einfluss der Flussabsenkung.

Insgesamt ergibt sich damit für die Berechnung der Lastdrehzahl $n_L$ die Gleichung (1), so dass mit (1) aus den Messgrößen $f_{FU}$, $I_{mess}$ und $U_{mess}$ und den Kennfelddaten die Lastdrehzahl $n_L$ berechnet werden kann. Mit den vorstehend angeführten Überlegungen ist die Lastdrehzahl immer sicher, d. h. die tatsächliche Drehzahl der Welle des Elektromotors kann die berechnete Lastdrehzahl nicht übersteigen.

Im Mikroprozessor 22 wird geprüft, ob die so ermittelte Lastdrehzahl $n_L$ einer vorgegebenen Solldrehzahl im Rahmen vorgegebener Toleranzen entspricht. Ist dies nicht der Fall, liegt eine Fehlfunktion vor und es wird ein Sicherheitsschaltsignal 30 mit Mitteln 28 zum Erzeugen eines fehlersicheren Schaltsignals abgegeben. Dieses Sicherheitsschaltsignal 30 kann das Schaltmittel 16 auslösen zum Abschalten des Motors 10.

Weiter kann in diesem ersten Ausführungsbeispiel mit Mittel 34 zur Bestimmung des Lastdrehmoments $M_L$ nach unterer Gleichung (2) aus dem erfassten Strom $I_{mess}$ und den Kennfelddaten für das Nenndrehmoment $M_n$ und für den Nennstrom $I_n$ das Lastdrehmoment $M_L$ bestimmt werden, so dass z. B. bei Blockade des Motors und damit Überschreiten einer vorgegebenen Obergrenze für das Drehmoment, eine fehlersichere Abschaltung erfolgen kann.

Der Ständerstrom, also derjenige Strom, den der Frequenzumrichter treiben muss, steigt bei den Asynchronmotoren, die üblicherweise in der industriellen Antriebstechnik eingesetzt werden, bis zum 1,5-fachen Nenndrehmoment $M_n$ nahezu linear an. Darüber steigt der Strom überproportional zum Lastmoment an. Somit ist sichergestellt, dass bei der Ermittlung des Lastdrehmoments $M_L$ aus dem gemessenen Strom $I_{mess}$, das resultierende abgeleitete Lastdrehmoment $M_L$ immer geringer ist als dasjenige, welches sich maximal an der Motorwelle einstellen wird. Somit sind das resultierende Lastdrehmoment $M_L$ und die Lastdrehzahl $n_L$ immer als sicher im Sinne der funktionalen Sicherheit zu sehen. Dieses Verhalten und der Umstand, dass in der industriellen Antriebstechnik Frequenzumrichter typischerweise nur für 60 sec den doppelten Nennstrom $I_n$ abgeben können, erlauben die Anwendung der folgenden Beziehung

$$(2) \qquad M_L = M_n * \frac{I_{mess}}{I_n} * \frac{U_{mess}}{f_{FU}} * \frac{f_N}{U_N}$$

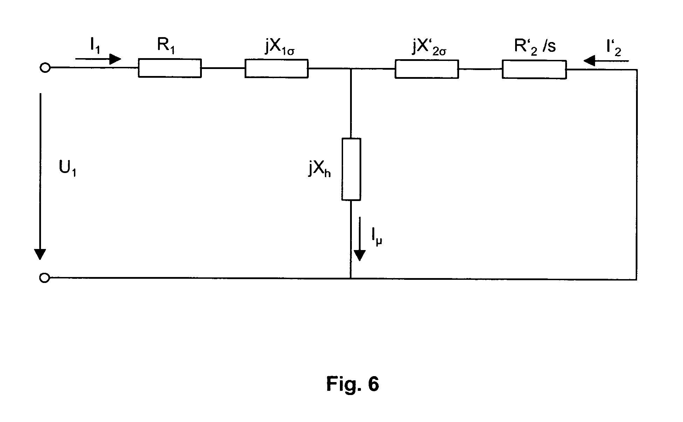

In einem zweiten Ausführungsbeispiel erfolgt die Berechnung der Lastdrehzahl anhand eines anderen Beobachtermodells, das auf dem T-Ersatzschaltbild der Asynchronmaschine basiert, wie dies in Fig. 6 dargestellt ist. Zur Bestimmung des Kippmoments wird die Gleichung (3) angewandt. Die hierzu erforderlichen Maschinenparameter können anhand der Typenschilddaten nach einem Verfahren, das auch bei Nguyen Phung Quang, Jörg-Andreas Dittrich, "Praxis der feldorientierten Drehstromantriebsregelung", Kap. 6.3.1, Berechnung mit Leistungsfaktor Cos(phi) bei ASM, Seite 168 beschrieben ist, berechnet werden. Sind diese Parameter bekannt, können die nachfolgend dargestellten Gleichungen angewendet werden, um Drehzahl und Drehmoment zu berechnen.

$$(3) \qquad M_k = \frac{p * U_{mess}^2}{4 * \pi * f_{FU} * X_\sigma}$$

p     Anzahl Polpaare
$X_\sigma$     Streuinduktivität

Dann errechnet sich der Schlupf s auf Basis des T-Ersatzschaltbilds zu

$$(4) \qquad s = \frac{R_r * K'}{\sqrt{\left(\frac{U_{mess}}{I_{mess}}\right)^2 - X_\sigma^2}}$$

wobei $R_r$ der Rotorwiderstand ist. Für die praktische Ausführung wurde noch ein Korrekturfaktor K eingeführt, damit eventuelle Abweichungen im Nennbetriebspunkt der Maschine kompensiert werden können.

Damit lässt sich die Lastdrehzahl $n_L$ errechnen nach

$$(5) \qquad n_L = n_{syn}(1-s)$$

Aus den Kloßschen Formeln lässt sich dann in einfacher Weise das Lastdrehmoment $M_L$ bestimmen, mit

$$(6) \qquad s_k = \frac{R_r^{'}}{X_\sigma}$$

und

$$(7) \qquad M_L = \frac{2 * M_k}{\dfrac{s}{s_k} + \dfrac{s_k}{s}}$$

Wie im ersten Ausführungsbeispiel wird im Mikroprozessor 22 geprüft, ob die so ermittelte Lastdrehzahl $n_L$ der vorgegebenen Solldrehzahl im Rahmen vorgegebener Toleranzen entspricht und gegebenenfalls das Sicherheitsschaltsignal 30 abgegeben. Gleiches gilt für die Überwachung des Lastdrehmoments $M_L$. Dieses zweite Verfahren hat den wesentlichen Vorteil, dass es sich auf präzisere Maschinenparameter stützt und anhand des Kippschlupfes auch das Kippen der Asynchronmaschine erkennen kann. Somit entfällt hier die Beschränkung, dass es nur bis zum doppelten Motornennstrom eingesetzt werden kann.

Beiden Ausführungsbeispielen ist nun wieder gemeinsam, dass der gleiche Ablauf auch im Kanal B erfolgt. Zusätzlich gibt jeder Mikroprozessor 22 und 24 sein Ergebnis an eine Vergleichseinheit 32, in der die Ergebnisse beider Mikroprozessoren miteinander verglichen werden. Sollte eine Abweichung vorliegen, kann auch die Vergleichseinheit 32 die Schalterzeugungsmittel 28 beider Kanäle ansteuern zur Ausgabe eines Sicherheitsschaltsignals 30.

Bei der für die Momentenermittlung notwendige Stromerfassung kann es vorteilhaft sein, einen Grenzwert für die aufaddierten Augenblickwerte der Ströme festzulegen, um sicher zu stellen, dass bei der Ausbildung eines zu hohen Drehmoments eine schnelle Abschaltung erfolgt.

In einer anderen Ausführungsform der Erfindung kann auf dem ersten Mikroprozessor 22 das erste Beobachtermodell und auf dem zweiten Mikroprozessor 24 das zweite Beobachtermodell gerechnet werden oder umgekehrt. So wäre eine noch größere Diversität zur Erhöhung der Sicherheit geschaffen. Allerdings ist zu berücksichtigen, dass der Mikroprozessor, der das zweite Beobachtermodell berechnen würde, auch die Kippüberwachung realisiert, da dies nicht durch andere Modelle erfolgen kann.

Des Weiteren können in beiden Ausführungsbeispielen Mittel 36 zur Konsistenzprüfung der Spannungen und Ströme vorgesehen seien, mit denen aus jeweils zwei Spannungen bzw. Strömen die dritte Spannung bzw. der dritte Strom gemäß $\Sigma U=0$ bzw. $\Sigma I=0$ berechnet werden kann. Bei Abweichungen eines berechneten Spannungswertes oder Stromwertes mit dem entsprechenden direkt erfassten Spannungswert bzw. Stromwert liegt eine Fehlfunktion, wie Leitungsbruch, Kurzschluss, Querschluss, Phasenausfall oder dergleichen vor und die Schalterzeugungsmittel 28 werden aktiviert. Die Spannungen an den Motorphasen werden also gegeneinander und nicht gegen den Neutralleiter gemessen. Da die Phasenlage gemessen zwischen Außenleiter zu Außenleiter und Außenleiter zu Neutralleiter bekannt ist, kann dies genutzt werden, um wieder auf die Spannungsverhältnisse Außenleiter zu Neutralleiter zurück zu rechnen.

Da von den drei Messwerten für Strom und Spannung zwei verwendet werden, um einen Referenzwert für den dritten Messwert zu berechnen, müssen die Mittel 20 zur Erfassung der Ströme und Spannungen nicht redundant ausgeführt sein. Sind Referenz- und Messwert unterschiedlich, so wird in den sicheren Zustand geschaltet. Durch dieses Zwei-aus-Drei-Verfahren ist bereits eine gewisse Redundanz im Messsystem vorhanden.

Weiter sind Mittel 38 zur Bestimmung der Drehrichtung vorgesehen. Diese Mittel 38 ermitteln die Abfolge der drei Phasen U1, V1, W1, woraus die Drehrichtung bestimmbar ist. Bei Abweichung von einer Soll-Drehrichtung erfolgt eine Aktivierung der Schaltsignalerzeugungsmittel 28 und damit ein fehlersicheres Abschalten des Motors 10.

Unter Kenntnis der Kennlinienverläufe des Asynchronmotors 10 kann mit Mitteln 40 zur Erkennung der Betriebsart auch der generatorische Betrieb erkannt werden. Beim generatorischen geführten Betrieb kann am Frequenzumrichter der Antriebselektronik 12 somit die Geschwindigkeit und die Verzögerung festgestellt werden. Bei harter Abschaltung kann die entstehende Remanenzspannung verwendet werden, um den Auslauf der Maschine festzustellen.

Wie aus dem in Fig. 5 dargestellten Kurvenverlauf eines typischen Drehmomentverlaufs zu ersehen ist, hat eine Asynchronmaschine im generatorischen Betrieb eine nahezu identische Charakteristik wie beim motorischen Betrieb, wobei der Verlauf in einen anderen Quadranten gespiegelt ist. Das bedeutet, dass die oben genannten Bedingungen auch für den Generatorbetrieb gelten, welcher einen Bremsvorgang beschreibt. Die Mittel 40 erkennen dabei die Betriebsart über den Phasenwinkel zwischen Strom und Spannung. Der Strom ändert im generatorischen Betrieb sein Vorzeichen und somit seine Richtung und ist in Gegenphase zur Spannung.

Generatorischer Betrieb wird auch für die Synchronmaschine erkannt. Die Erkennung erfolgt anhand der Phasenlage zwischen Strom und Spannung an den Motoranschlussleitungen.

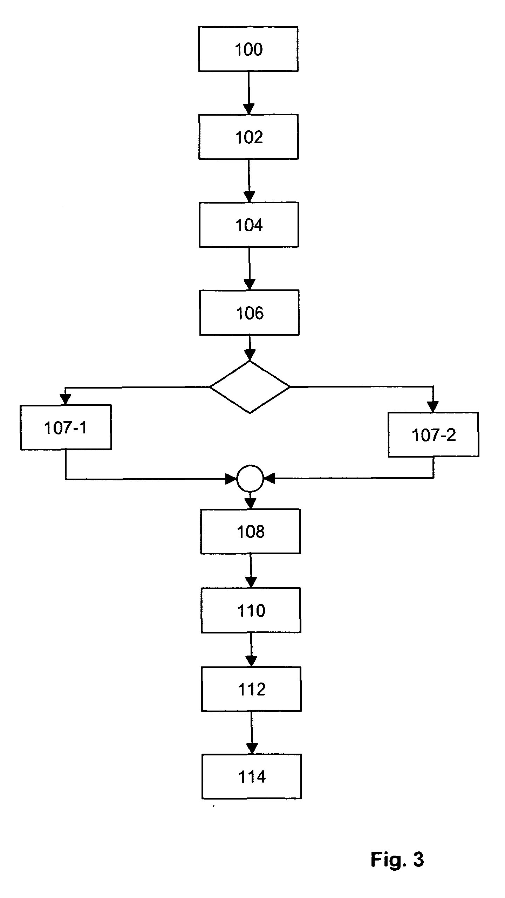

Im Folgenden wird der Gesamtablauf der Überwachung des Asynchronmotors 10 anhand des Flussdiagramms aus Fig. 3 noch einmal zusammengefasst:

In einem ersten Schritt 100 werden die Strom- und Spannungsverläufe erfasst.

In einem nächsten Schritt 102 werden aus den getakteten pulsweitenmodulierten Signalen mittels des oben beschriebenen Messverfahrens kontinuierliche Signale erzeugt, um diejenigen Signale zu erhalten, die letztendlich der Motor 10 "sieht". In diesem Schritt werden auch die Effektivwerte von Strom und Spannung aus einer gleitenden Mittelwertbildung bestimmt.

In Schritt 104 erfolgt die Konsistenzprüfung und damit die Erkennung von Fehlern wie Leitungsbrüchen, Kurzschlüssen, Phasenausfällen oder dergleichen.

In Schritt 106 wird die Betriebsart bestimmt. Liegt eine generatorische Betriebsart vor, wird die generatorische Kennlinie im Schritt 107-2 benutzt; im anderen Fall, wenn ein motorischer Betrieb erfolgt, wird alternativ im Schritt 107-1 die motorische Kennlinie benutzt.

Dann kann in Schritt 108 aus der Phasenabfolge die Drehrichtung bestimmt werden.

Danach erfolgt im Schritt 110 die Bestimmung der Drehzahl in der oben beschriebenen Weise, nämlich unter Anwendung eines Beobachtermodells letztendlich aus der Frequenz des Frequenzumrichters und den Strömen und Spannungen am Elektromotor.

In Schritt 112 wird das Drehmoment bestimmt und in Schritt 114 schließlich werden alle Daten zusammengeführt, was dazu führt, ob ein Sicherheitsschaltsignal erzeugt wird oder nicht.

Mit der erfindungsgemäßen Vorrichtung 14 und dem erfindungsgemäßen Verfahren sind auch Synchronmotoren hinsichtlich der Lastdrehzahl und Lastdrehmoment überwachbar.

Die Synchronmaschine arbeitet ohne Schlupf, daher ist hier die Messung der Ausgangsfrequenz $f_{FU}$ des Frequenzumrichters der Antriebselektronik 12 als Kriterium für die sichere Drehzahlerfassung ausreichend. Für den Fall, dass der Rotor vom Ständerdrehfeld nicht mitgeführt wird, d. h. sich der Rotor nicht mit der Ständerfrequenz dreht, ist die Maschine nicht sauber geführt. Dieser Fall stellt aber unter dem

Gesichtspunkt der funktionalen Sicherheit keinen kritischen Fall dar, da hier die Lastdrehzahl geringer ist, als die durch die Vorrichtung 14 ermittelte. Also gilt:

$$(8) \qquad n_L = \frac{1}{p} * f_{FU} * 60 s/\min$$

Die Synchronmaschine kann ab Drehzahl = 0 bis zur Synchrondrehzahl ein konstantes Lastdrehmoment abgeben. Das Lastdrehmoment ist außerhalb der Sättigung der Maschine proportional zum Eingangsstrom. Die Synchronmaschine sollte nicht im Bereich der Sättigung betrieben werden, stellt aber aus dem

$$(9) \qquad M_L = M_n * \frac{I_{mess}}{I_n}$$

Gesichtspunkt der funktionalen Sicherheit keinen kritischen Fall dar, da in der Sättigung das Lastdrehmoment weniger steigt als der Eingangsstrom. Somit gilt für die sichere Ermittlung des Lastdrehmoments:

Dies lineare Zusammenhang gilt allerdings nur bis zur Nennfrequenz der Synchronmaschine, im Feldschwächbereich steigt der Strom schneller an, da die Spannungsreserve fehlt.

### Patentansprüche

1. Verfahren zum fehlersicheren Überwachen eines elektromotorischen Antriebs (10) mit dreiphasiger Ansteuerung mit den Schritten:

   1) Erfassen der Strom- und Spannungsverläufe, wie sie von einer Antriebselektronik (12) an den Motor (10) gegeben werden, wobei Effektivwerte von Strom ($I_{mess}$, $I_{eff}$) und Spannung ($U_{mess}$, $U_{eff}$) bestimmt werden, indem man die Werte der drei Phasen (U, V, W) an einem Messpunkt aufaddiert und daraus den gleitenden Mittelwert bestimmt und in Abhängigkeit der Anzahl Messpunkte daraus die Effektivwerte ermittelt,
   2) Ermitteln der Lastdrehzahl ($n_L$) unter Verwendung dieser Werte, wobei die Lastdrehzahl ($n_L$) durch Berechnen eines Beobachtermodells anhand der erfassten Effektivwerte von Strom ($I_{mess}$, $I_{eff}$) und Spannung ($U_{mess}$, $U_{eff}$), der von der Ansteuerung vorgegebenen Frequenz ($f_{FU}$, $f_{sync}$) und der Kennfelddaten des Motors (10) erfolgt und
   3) fehlersicheres Abschalten des Antriebs (10), wenn die berechnete Lastdrehzahl ($n_L$) nicht mit einer vorgegebene Solldrehzahl im Rahmen vorgegebener Toleranzen übereinstimmt.

2. Verfahren nach Anspruch 1, **dadurch gekennzeichnet, dass** im Falle des Asynchronmotors die Lastdrehzahlbestimmung anhand der Formel

$$n_L = \frac{1}{p} * f_{FU} * 60s/\min - \frac{I_{mess}}{I_n} * \frac{f_{FU}}{U_{mess}} * \frac{U_N}{f_N} * (n_{syn} - n_n)$$

erfolgt, wobei

   $I_n$ Nennstrom
   $f_N$ Nennfrequenz
   $U_N$ Nennspannung
   $n_{syn}$ Synchrondrehzahl
   $n_n$ Nenndrehzahl
   $n_L$ Lastdrehzahl
   p Polpaarzahl

als Kennfelddaten hinterlegt sind.

3. Verfahren nach einem der vorhergehenden Ansprüche, **dadurch gekennzeichnet, dass** aus dem erfassten Strom ($I_{mess}$) und den Kennfelddaten für das Nenndrehmoment ($M_n$) und den Nennstrom ($I_n$) das Lastdrehmoment ($M_L$) bestimmt wird und bei Überschreiten eines Grenzwertes eine fehlersichere Abschaltung erfolgt.

4. Verfahren nach Anspruch 1, **dadurch gekennzeichnet, dass** im Falle des Asynchronmotors die Lastdrehzahlbestimmung anhand der Formel

$$n = n_{syn}(1 - s)$$

erfolgt, wobei $n_{syn}$ die Synchrondrehzahl und s der Schlupf ist.

5. Verfahren nach Anspruch 4, **dadurch gekennzeichnet, dass** der Schlupf sich aus den Effektivwerten von Strom und Spannung, dem Rotorwiderstand und der Streuinduktivität errechnet.

6. Verfahren nach einem der vorhergehenden Ansprüche 4 oder 5, **dadurch gekennzeichnet, dass** aus den Kenn-

felddaten das Kippmoment ($M_k$) und der Kippschlupf ($s_k$) berechnet wird und zusammen mit dem Schlupf (s) das Lastdrehmoment ($M_L$) bestimmt wird und bei Überschreiten eines Grenzwertes eine fehlersichere Abschaltung erfolgt.

7. Verfahren nach Anspruch 1, **dadurch gekennzeichnet, dass** im Falle des Synchronmotors die Lastdrehzahlbestimmung anhand der Formel

$$n_L = \frac{1}{p} * f_{FU} * 60 s/\min$$

erfolgt.

8. Verfahren nach einem der vorhergehenden Ansprüche, **dadurch gekennzeichnet, dass** die Berechnung des Beobachtermodells in einem Mikroprozessor (22, 24) erfolgt und die erfassten Strom- und Spannungssignale für eine Mikroprozessor-Auswertung angepasst werden.

9. Verfahren nach einem der vorhergehenden Ansprüche, **dadurch gekennzeichnet, dass** die Spannungen und Ströme aller drei Phasen erfasst werden und aus jeweils zwei Spannungen bzw. Strömen die dritte Spannung bzw. der dritte Strom gemäß $\Sigma U=0$ bzw. $\Sigma I=0$ berechnet wird und bei Abweichungen eines berechneten mit dem entsprechenden gemessenen Wert eine fehlersichere Abschaltung erfolgt.

10. Verfahren nach einem der vorhergehenden Ansprüche, **dadurch gekennzeichnet, dass** über den Phasenwinkel zwischen Strom und Spannung eine motorische oder eine generatorische Betriebsart erkannt wird.

11. Verfahren nach einem der vorhergehenden Ansprüche, **dadurch gekennzeichnet, dass** aus der Phasenfolge der drei Phasen (U, V, W) die Drehrichtung bestimmt wird und bei Abweichung von einer Soll-Drehrichtung ein fehlersicheres Abschalten erfolgt.

12. Vorrichtung zum fehlersicheren Überwachen eines elektromotorischen Antriebs (10) mit dreiphasiger Ansteuerung eines Elektromotors zur Durchführung eines Verfahrens nach einem der vorhergehenden Ansprüche, mit Mitteln (20) zum Erfassen der Strom- und Spannungsverläufe jeder der drei Phasen (U, V, W), wie sie von einer Antriebselektronik (12) an den Motor (10) gegeben werden, mit einer Aufbereitungseinheit (23), in der aus den Strom-Spannungsverläufen Effektivwerte von Strom ($I_{mess}$, $I_{eff}$) und Spannung ($U_{mess}$, $U_{eff}$) bestimmt werden, indem die Werte der drei Phasen (U, V, W) an einem Messpunkt aufaddiert und daraus der gleitende Mittelwert bestimmt und in Abhängigkeit der Anzahl Messpunkte daraus die Effektivwerte ermittelt werden, mit Mitteln (26) zum Ermitteln der Lastdrehzahl ($n_L$) unter Verwendung der erfassten Effektivwerte von Strom- und Spannung ($I_{mess}$, $U_{mess}$; $I_{eff}$, $U_{eff}$), wobei die Ermittlung der Lastdrehzahl ($n_L$) durch Berechnen eines Beobachtermodells anhand der erfassten Effektivwerte von Strom und Spannung, der von der Ansteuerung vorgegebenen Frequenz ($f_{FU}$) und der Kennfelddaten des Motors (10) erfolgt und mit Mitteln (28) zum Erzeugen eines fehlersicheren Schaltsignals (30) für den Motor (10), wenn die berechnete Lastdrehzahl ($n_L$) nicht mit einer vorgegebenen Solldrehzahl im Rahmen vorgegebener Toleranzen übereinstimmt.

13. Vorrichtung nach Anspruch 12, **dadurch gekennzeichnet, dass** die Mittel (22, 24) zum Berechnen des Beobachtermodells einen Mikroprozessor (22, 24) umfassen und die Vorrichtung Mittel (20) zum Anpassen der erfassten Strom- und Spannungssignale an die Mikroprozessor-Auswertung aufweist.

14. Vorrichtung nach einem der vorhergehenden Ansprüche 12 bis 13, **dadurch gekennzeichnet, dass** Mittel (38) zur Bestimmung des Lastdrehmoments ($M_L$) vorgesehen sind, die aus den erfassten Effektivwerten von Strom ($I_{mess}$, $I_{eff}$) und Spannung ($U_{mess}$, $U_{eff}$) und den Kennfelddaten das Lastdrehmoment ($M_L$) bestimmen und bei Überschreiten eines Grenzwertes eine fehlersichere Abschaltung erfolgt.

15. Vorrichtung nach einem der vorhergehenden Ansprüche 12 oder 14, **dadurch gekennzeichnet, dass** die Mittel (20) zum Erfassen der Strom- und Spannungsverläufe alle drei Phasen (U, V, W) erfassen und Mittel (34) zur Konsistenzprüfung der Spannungen und Ströme vorgesehen sind, mit denen aus jeweils zwei Spannungen bzw. Strömen die dritte Spannung bzw. der dritte Strom gemäß $\Sigma U=0$ bzw. $\Sigma I=0$ berechnet werden kann und bei Abweichungen eines berechneten mit dem entsprechenden gemessenen Wert eine fehlersichere Abschaltung erfolgt.

16. Vorrichtung nach einem der vorhergehenden Ansprüche 12 bis 15, **dadurch gekennzeichnet, dass** Mittel (40) zur Erkennung der Betriebsart vorgesehen sind, um zu erkennen, ob eine motorische oder eine generatorische Betriebsart vorliegt.

17. Vorrichtung nach einem der vorhergehenden Ansprüche 12 bis 16, **dadurch gekennzeichnet, dass** Mittel (36) zur Bestimmung der Drehrichtung vorgesehen sind, die aus der Phasenabfolge der drei Phasen (U, V, W) die Drehrichtung bestimmen und bei Abweichung von einer Soll-Drehrichtung ein fehlersicheres Abschalten erfolgt.

18. Vorrichtung nach einem der vorhergehenden Ansprüche 12 bis 17, **gekennzeichnet durch** einen zweikanaligen Aufbau, wobei insbesondere zwei redundante Mikroprozessoren (22 und 24) vorgesehen sind, die vorzugsweise diversitär sind und/oder auf denen diversitäre Algorithmen ablaufen.

**Claims**

1. Method for failsafe monitoring of an electromagnetic drive (10) with a three-phase control comprising the steps:

   1) detecting the current and voltage profiles, as they are provided to the motor (10) by drive electronics (12), whereby rms-values of current ($I_{mess}$, $I_{eff}$) and voltage ($U_{mess}$, $U_{eff}$) are determined by adding the values of the three phases at a measuring point and determine the moving average therefrom and determine the rms-values as a function of the numbers of measuring points;
   2) determining the load speed ($n_L$) while using these values, whereby the load speed ($n_L$) is determined by calculating an observer model with reference to the detected current ($I_{mess}$, $I_{eff}$), to the detected voltage ($U_{mess}$, $U_{eff}$), to the frequency ($f_{FU}$, $f_{sync}$) preset by the control and to the characteristic data of the motor (10) and;
   3) failsafe switching off of the drive (10) when the calculated load speed ($n_L$) does not correspond to a preset desired speed within the framework of preset tolerances.

2. Method in accordance with claim 1, **characterized in that**, in the case of the asynchronous motor, the load speed determination takes place with reference to the formula

$$n_L = \frac{1}{p} * f_{FU} * 60s/\min - \frac{I_{mess}}{I_n} * \frac{f_{FU}}{U_{mess}} * \frac{U_N}{f_N} * (n_{syn} - n_n)$$

where

   $I_n$ nominal current
   $f_N$ nominal frequency
   $U_N$ nominal voltage
   $n_{syn}$ synchronous speed
   $n_n$ nominal speed
   $n_L$ load speed
   p pole pair number

are stored as characteristic data.

3. Method in accordance with any preceding claim, **characterized in that** the load torque ($M_L$) is determined from the detected current ($I_{mess}$) and the characteristic data for the nominal torque ($M_n$) and for the nominal current ($I_n$) and a failsafe switching off takes place on exceeding a limit value.

4. Method in accordance with claim 1, **characterized in that**, in the case of the asynchronous motor, the load speed determination takes place with reference to the formula

$$n = n_{syn}(1 - s)$$

where $n_{sync}$ is the synchronous speed and s is the slip.

5. Method in accordance with claim 4, **characterized in that** the slip is calculated from the effective values of current and voltage, the rotor resistance and the leakage inductance.

6. Method in accordance with any of the preceding claims 4 or 5, **characterized in that** the tilting torque ($M_k$) and the tilting slip ($s_k$) is calculated from the characteristic data and the load torque ($M_L$) is determined together with the slip (s) and a failsafe switching off takes place on exceeding a limit value.

7. Method in accordance with claim 1, **characterized in that**, in the case of the asynchronous motor, the load speed determination takes place with reference to the formula

$$n_L = \frac{1}{p} * f_{FU} * 60 s / \min$$

8. Method in accordance with any preceding claim, **characterized in that** the calculation of the observer model takes place in a microprocessor (22, 24) and the detected current and voltage signals are adapted for a microprocessor evaluation.

9. Method in accordance with any preceding claim, **characterized in that** the voltages and currents of all three phases are detected and the third voltage and the third current respectively is determined from the respective voltages and currents in accordance with ΣU=0 and ΣI=0 respectively and a failsafe switching off takes place on deviations of a calculated value from the corresponding measured value.

10. Method in accordance with claim 1, **characterized in that** a motor or a generator operating mode is recognized via the phase angle between the current and the voltage.

11. Method in accordance with any preceding claim, **characterized in that** the direction of rotation is determined from the phase sequence of the three phases (U, V, W) and a failsafe switching off takes place on a deviation from a desired direction of rotation.

12. Apparatus for the failsafe monitoring of an electromotive drive (10) with a three-phase control of an electric motor for a method according to any of the preceding claims, the apparatus comprising means (20) for detecting the current and voltage profiles of each of the three phases (U, V, W), as they are provided to the motor (10) by drive electronics (12), a preparation unit (23) in which rms-values of current ($I_{mess}$, $I_{eff}$) and voltage ($U_{mess}$, $U_{eff}$) are determined from current and voltage runs by adding the values of the three phases at a measuring point and determine the moving average therefrom and determine the rms-values as a function of the numbers of measuring points, means (26) for determining the load speed ($n_L$) while using the detected current and voltage values ($I_{mess}$), ($U_{mess}$; $I_{eff}$, $U_{eff}$), wherein the determination of the load speed ($n_L$) takes place by calculating an observer model with reference to the detected current, to the detected voltage, to the frequency ($f_{FU}$) preset by the control and to the characteristic data of the motor (10), and comprising means (28) for generating a failsafe switching signal (30) for the motor (10) when the calculated load speed ($n_L$) does not correspond to a preset desired speed within the framework of preset tolerances.

13. Apparatus in accordance with claim 12, **characterized in that** the means (22, 24) for calculating the observer model include a microprocessor (22, 24) and the apparatus has means (20) for adapting the detected current and voltage signals to the microprocessor evaluation.

14. Apparatus in accordance with claim 12 or 13, **characterized in that** means (38) for determining the load torque ($M_L$) are provided which determine the load torque ($M_L$) from the detected current ($I_{mess}$, $I_{eff}$) and from the detected voltage ($U_{mess}$, $U_{eff}$) and from the characteristic data and a failsafe switching off takes place on exceeding a limit value.

15. Apparatus in accordance with any of claims 12 to 14, **characterized in that** the means (20) for detecting the current and voltage profiles detect all three phases (U, V, W) and means (34) for consistency checking of the voltages and currents are provided with which the third voltage and the third current respectively can be calculated from two respective voltages and two respective currents in accordance with ΣU=0 and ΣI=0 respectively and a failsafe switching off takes place on deviations of a calculated value from the corresponding measured value.

16. Apparatus in accordance with any of claims 12 to 15, **characterized in that** means (40) are provided for recognizing the operating mode to recognize whether a motor or a generator operating mode is present.

17. Apparatus in accordance with any of claims 12 to 16, **characterized in that** means (36) for determining the direction of rotation are provided which determine the direction of rotation from the phase sequence of the three phases (U, V, W) and a failsafe switching off takes place on a deviation from a desired direction of rotation.

18. An apparatus in accordance with any of claims 12 to 17, **characterized by** a two-channel design, with in particular two redundant microprocessors (22 and 24) being provided which are preferably diverse and/or on which diverse algorithms run.

**Revendications**

1. Procédé pour la surveillance sécurisée vis-à-vis des erreurs d'un entraînement à moteur électrique (10) avec pilotage triphasé, comprenant les étapes consistant à :

   1) détecter les évolutions du courant et de la tension tels qu'ils sont envoyés d'une unité électronique d'entraînement (12) au moteur (10), de sorte que l'on détermine des valeurs effectives du courant ($I_{mess}$, $I_{eff}$) et de la tension ($U_{mess}$, $U_{eff}$), en additionnant les valeurs des trois phases (U, V, W) en un point de mesure et en déterminant à partir de ces valeurs la valeur moyenne glissante et, en fonction du nombre des points de mesure, on détermine à partir de celles-ci les valeurs effectives,
   2) déterminer la vitesse de rotation en charge ($n_L$) en utilisant ces valeurs, telles que la vitesse de rotation en charge ($n_L$) est obtenue par calcul d'un modèle observateur au moyen des valeurs effectives déterminées du courant ($I_{mess}$, $I_{eff}$) et de la tension ($U_{mess}$, $U_{eff}$), de la fréquence ($s_{FU}$, $s_{ync}$) prédéterminée par le pilotage et des données de champ caractéristiques du moteur (10), et
   3) couper l'entraînement (10) en sécurité vis-à-vis des erreurs quand la vitesse de rotation en charge calculée ($n_L$) ne coïncide pas avec une vitesse de rotation de consigne prédéterminée dans le cadre de tolérances prédéterminées.

2. Procédé selon la revendication 1, **caractérisé en ce que**, dans le cas d'un moteur asynchrone, la détermination de la vitesse de rotation en charge a lieu au moyen de la formule :

$$n_L = \frac{1}{p} * f_{FU} * 60 s/\min - \frac{I_{mess}}{I_n} * \frac{f_{FU}}{U_{mess}} * \frac{U_N}{f_N} * (n_{syn} - n_n)$$

dans laquelle

In : courant nominal
$f_N$ : fréquence nominale
$U_N$ : tension nominale
$n_{syn}$ : vitesse de rotation synchrone
$n_n$ vitesse de rotation nominale
$n_L$ : vitesse de rotation en charge
p : nombre de paires de pôles

sont mémorisés à titre de données de champ caractéristiques.

3. Procédé selon l'une des revendications précédentes, **caractérisé en ce que** l'on détermine le couple de rotation en charge ($M_L$) à partir du courant détecté ($I_{mess}$) et des données de champ caractéristiques pour le couple de rotation nominal ($M_n$) et le courant nominal ($I_n$) et en cas de dépassement d'une valeur limite, il se produit une coupure sécurisée vis-à-vis des erreurs.

**4.** Procédé selon la revendication 1, **caractérisé en ce que** dans le cas d'un moteur asynchrone, la détermination de la vitesse de rotation en charge a lieu au moyen de la formule

$$n = n_{syn}(1\text{-}s)$$

dans laquelle $n_{syn}$ est la vitesse de rotation synchrone et s est le glissement.

**5.** Procédé selon la revendication 4, **caractérisé en ce que** le glissement est calculé à partir des valeurs effectives du courant et de la tension, de la résistance du rotor et de l'auto-induction de fuite.

**6.** Procédé selon l'une des revendications précédentes 4 5, **caractérisé en ce que** l'on calcule le couple de basculement ($M_k$) et le glissement de basculement ($s_k$) à partir des données de champ caractéristiques et l'on détermine le couple de rotation en charge ($M_L$) conjointement avec le glissement (s) et, en cas de dépassement d'une valeur limite, il se produit une coupure sécurisée vis-à-vis des erreurs.

**7.** Procédé selon la revendication 1, **caractérisé en ce que** dans le cas d'un moteur synchrone, la détermination de la vitesse de rotation en charge a lieu au moyen de la formule

$$n_L = \frac{1}{p} * f_{FU} * 60 s / \min$$

**8.** Procédé selon l'une des revendications précédentes, **caractérisé en ce que** le calcul du modèle observateur a lieu dans un microprocesseur (22, 24), et les signaux de courant et de tension sont adaptés pour une évaluation par le microprocesseur.

**9.** Procédé selon l'une des revendications précédentes, **caractérisé en ce que** les tensions et les courants de toutes les trois phases sont déterminés et l'on calcule respectivement à partir de deux tensions ou deux courants la troisième tension ou le troisième courant d'après la formule EU = 0 ou ΣI = 0 et, en cas d'écart d'une valeur calculée avec la valeur mesurée correspondante, il se produit une coupure sécurisée vis-à-vis des erreurs.

**10.** Procédé selon l'une des revendications précédentes, **caractérisé en ce que** l'on reconnaît, au moyen de l'angle de phase entre le courant et la tension, un mode de fonctionnement en moteur ou un mode de fonctionnement en générateur.

**11.** Procédé selon l'une des revendications précédentes, **caractérisé en ce que** l'on détermine le sens de rotation à partir de la succession des trois phases (U, V, W), et en cas d'écart par rapport à un sens de rotation de consigne, il se produit une coupure sécurisée vis-à-vis des erreurs.

**12.** Dispositif pour la surveillance sécurisée vis-à-vis des erreurs d'un entraînement à moteur électrique (10) avec pilotage triphasé d'un moteur électrique pour la mise en oeuvre d'un procédé selon l'une des revendications précédentes, comprenant des moyens (20) pour détecter les évolutions du courant et de la tension de chacune des trois phases (U, V, W) tels qu'ils sont envoyés au moteur (10) depuis une unité électronique d'entraînement (12), comprenant une unité de traitement (23) dans laquelle des valeurs effectives du courant ($I_{mess}$, $I_{eff}$) et de la tension ($U_{mess}$, $U_{eff}$) sont déterminées à partir des évolutions du courant et de la tension, en additionnant les valeurs des trois phases (U, V, W) en un point de mesure et en déterminant la valeur moyenne glissante à partir de ces valeurs et, en fonction du nombre de points de mesure, on détermine à partir de celles-ci les valeurs effectives, comprenant des moyens (26) pour déterminer la vitesse de rotation en charge ($n_L$) en utilisant les valeurs effectives détectées du courant et de la tension ($I_{mess}$, $U_{mess}$ ; $I_{eff}$, $U_{eff}$), la détermination de la vitesse de rotation en charge ($n_L$) ayant lieu par calcul d'un modèle observateur au moyen des valeurs effectives détectées du courant et de la tension, de la fréquence prédéterminée par le pilotage ($f_{FU}$) et des données de champ caractéristiques du moteur (10), et comprenant des moyens (28) pour engendrer un signal de coupure (30) de sécurité vis-à-vis des erreurs pour le moteur (10) quand la vitesse de rotation en charge calculée ($n_L$) ne coïncide pas avec une vitesse de rotation de consigne prédéterminée dans le cadre de tolérances prédéterminées.

13. Dispositif selon la revendication 12, **caractérisé en ce que** les moyens (22, 24) pour calculer le modèle observateur comprennent un microprocesseur (22, 24), et le dispositif comprend des moyens (20) pour ajuster les signaux détectés de courant et de tension à l'évaluation par le microprocesseur.

14. Dispositif selon l'une des revendications précédentes 12 et 13, **caractérisé en ce qu'**il est prévu des moyens (38) pour la détermination du couple de rotation en charge ($M_L$), lesquels déterminent le couple de rotation en charge ($M_L$) à partir des valeurs effectives détectées du courant ($I_{mess}$, $I_{eff}$) et de la tension ($U_{mess}$, $U_{eff}$) et des données de champ caractéristiques, et en cas de dépassement d'une valeur limite, il se produit une coupure sécurisée vis-à-vis des erreurs.

15. Dispositif selon l'une des revendications précédentes 12 ou 14, **caractérisé en ce que** les moyens (20) pour détecter les évolutions du courant et de la tension détectent toutes les trois phases (U, V, W) et il est prévu des moyens (34) pour le contrôle d'homogénéité des tensions et des courants, au moyen desquels à partir de deux tensions ou de deux courants respectifs, il est possible de calculer la troisième tension ou le troisième courant d'après la formule EU = 0 ou ΣI = 0, et en cas d'écart d'une valeur calculée avec la valeur mesurée correspondante, il se produit une coupure sécurisée vis-à-vis des erreurs.

16. Dispositif selon l'une des revendications précédentes 12 à 15, **caractérisé en ce qu'**il est prévu des moyens (40) pour reconnaître le mode de fonctionnement, afin de reconnaître si l'on est en présence d'un mode de fonctionnement en moteur ou d'un mode de fonctionnement en générateur.

17. Dispositif selon l'une des revendications précédentes 12 à 16, **caractérisé en ce qu'**il est prévu des moyens (36) pour déterminer le sens de rotation, lesquels déterminent le sens de rotation à partir de la succession des trois phases (U, V, W) et en cas d'écart vis-à-vis d'un sens de rotation de consigne, il se produit une coupure sécurisée vis-à-vis des erreurs.

18. Dispositif selon l'une des revendications précédentes 12 à 17, **caractérisé par** une structure à deux canaux, dans laquelle il est en particulier prévu deux microprocesseurs redondants (22 et 24), qui sont de préférence diversitaires et dans lesquels se déroulent des algorithmes diversitaires.

**Fig. 1**

**Fig. 2**

**Fig. 3**

Fig. 4

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005010854 A1
- WO 2007085331 A1